# EUROPÄISCHE PATENTSCHRIFT

(11) **EP 2 047 155 B1**
(45) Veröffentlichungstag und Bekanntmachung des Hinweises auf die Patenterteilung: **03.11.2010**
(21) Anmeldenummer: 07847028.3
(22) Anmeldetag: 07.12.2007
(51) Int. Cl.: F16K 27/00

(54) **VENTILANORDNUNG**
VALVE ARRANGEMENT
SYSTÈME SOUPAPE

(30) Priorität: 18.01.2007 DE 102007002706
(43) Veröffentlichungstag der Anmeldung: 15.04.2009
(73) Patentinhaber: FESTO AG & Co. KG, 73734 Esslingen (DE)
(72) Erfinder: KEES, Ulrich, 66424 Homburg (DE)
(74) Vertreter: Abel, Martin
(86) Internationale Anmeldenummer: PCT/EP2007/010681
(87) Internationale Veröffentlichungsnummer: WO 2008/086848

(56) Entgegenhaltungen:
- EP-A- 0 493 972
- EP-A- 0 928 960

## Beschreibung

Die Erfindung betrifft eine Ventilanordnung, mit einem Ventilträger, der mindestens eine Montagefläche für eine Ventileinheit aufweist, und mit mindestens einer Ventileinheit, die unter Bildung einer Baugruppe an die mindestens eine Montagefläche ansetzbar und daran mittels zweier zueinander beabstandeter Befestigungseinrichtungen fixierbar ist, wobei die erste Befestigungseinrichtung einen an dem Ventilträger angeordneten ersten Hakenabschnitt und einen zum Verhaken damit vorgesehenen ortsfesten zweiten Hakenabschnitt an der Ventileinheit aufweist, und wobei die zweite Befestigungseinrichtung mindestens eine die Ventileinheit mit dem Ventilträger verspannende Halteklammer enthält.

Eine aus der EP 0493972 B1 bekannte Ventilanordnung dieser Art enthält eine erste Befestigungseinrichtung mit einem am Ventilträger verschwenkbar gelagerten ersten Hakenabschnitt, der über ein Gestänge mit einer ebenfalls an dem Ventilträger gelagerten Halteklammer einer zweiten Befestigungseinrichtung antriebsmäßig verbunden ist. Die Halteklammer ist ein abgewinkeltes Blechteil, das mittels einer auch auf das Gestänge einwirkenden Befestigungsschraube festklemmbar ist. Zur Montage wird eine Ventileinheit bei gelöster Befestigungsschraube zunächst in die Halteklammer eingehängt und dann zur Bildung einer Ventileinheit-Ventilträger-Baugruppe an die Montagefläche des Ventilträgers herangeschwenkt. Hierdurch gelangt der erste Hakenabschnitt in eine einem an der Ventileinheit ortsfest angeordneten zweiten Hakenabschnitt gegenüberliegende Bereitschaftsposition. Durch anschließendes Festziehen der Befestigungsschraube wird zum einen die Halteklammer festgeklemmt und zum anderen gleichzeitig, über das Gestänge, der erste Hakenabschnitt in einen Verhakungseingriff mit dem zweiten Hakenabschnitt verschwenkt und mit diesem verspannt. Dadurch ist die Ventileinheit insgesamt in lösbarer Weise mit dem Ventilträger verspannt.

Die bei diesem Stand der Technik vorhandenen Befestigungseinrichtungen dürften zwar zufriedenstellend arbeiten. Insbesondere ermöglichen sie ein Festspannen der Ventileinheit an dem Ventilträger durch Betätigungsmaßnahmen, die sich auf eine Seite der Baugruppe beschränken, nämlich das Festziehen der Befestigungsschraube. Die große Anzahl von Bauteilen der beiden Befestigungseinrichtungen und die Maßnahmen zu deren Montage am Ventilträger haben jedoch relativ hohe Herstellungskosten zur Folge und eine recht zeitraubende Montage der einzelnen Komponenten am Ventilträger.

Aus der DE-PS 1211453 ist eine Ventilanordnung bekannt, bei der eine Ventileinheit ebenfalls mittels zweier zueinander beabstandeter Befestigungseinrichtungen an einem Ventilträger festlegbar ist. Die eine Befestigungseinrichtung umfasst einen Kniehebelverschluss, mit dem die Ventileinheit gegen den Ventilträger vorspannbar ist. Vor dem Aktivieren des Kniehebelverschlusses wird die Ventileinheit in zur Montagefläche paralleler Richtung an den Ventilträger abgesteckt, wobei sie über die andere Befestigungseinrichtung in den Ventilträger eingehängt wird. Bei dieser Ventilanordnung nimmt der Kniehebelverschluss relativ viel Platz in Anspruch. Außerdem kann beim Anstecken der Ventileinheit an den Ventilträger eine Beschädigung der zwischen diesen beiden Komponenten vorhandenen Dichtungen auftreten, weil die Ventileinheit hierbei auf der Montagefläche entlanggleitet. Der letztgenannte Nachteil lässt sich zwar vermeiden, indem die Ventileinheit an beiden Stirnseiten mittels je eines Kniehebelverschlusses mit dem Ventilträger verspannt wird. Dies erfordert jedoch aktive Betätigungsmaßnahmen an zwei Seiten der Ventileinheit-Ventilträger-Baugruppe, was relativ umständlich ist und häufig aufgrund ungünstiger Platzverhältnisse am Einsatzort der Ventilanordnung behindert wird.

Aus der DE 3447263 A1 ist es bekannt, einzelne Segmente eines Ventilträgers mittels schwalbenschwanzförmiger Klammern zusammenzuklammern. Die Klammern werden seitwärts in Nuten der benachbarten Ventilträgersegmente eingeschoben. Da auf entgegengesetzten Seiten der Ventilträgersegmente je eine Klammer angebracht werden muss, ist die Handhabung auch hier relativ umständlich.

Es ist die Aufgabe der vorliegenden Erfindung, eine ventilanordnung zu schaffen, die ein einfaches und sicheres Befestigen mindestens einer Ventileinheit an einem Ventilträger ermöglicht.

Zur Lösung dieser Aufgabe ist vorgesehen, dass der zu der ersten Befestigungseinrichtung gehörende erste Hakenabschnitt ortsfest und unabhängig von der Halteklammer der zweiten Befestigungseinrichtung an dem Ventilträger angeordnet ist, und dass die Halteklammer U-förmig mit zwei sich gegenüberliegenden Klemmschenkeln ausgebildet ist, wobei sie derart an die zuvor unter gegenseitigem Verhaken der Hakenabschnitte zusammengesetzte Baugruppe ansteckbar ist, dass ihre Klemmschenkel je einen Klemmabschnitt der Ventileinheit und des Ventilträgers mit Vorspannung übergreifen und dadurch die Ventileinheit gegen die Montagefläche spannen.

Auf diese Weise ist die Ventileinheit durch einerseits ein Verhaken und andererseits ein Verklammern mit einfachen Maßnahmen sicher an einem Ventilträger fixierbar. Bei der Montage wird zunächst der Verhakungseingriff hergestellt und anschließend die Halteklammer angesteckt. Das Verhaken geschieht unabhängig vom Verklammern, sodass keine Interaktion zwischen den beiden Befestigungseinrichtungen erforderlich ist und der bauliche Aufwand mithin auf ein Minimum reduziert werden kann. Anbau und Befestigung der Ventileinheit können von einer Seite her stattfinden, was auch unter ungünstigen Platzverhältnissen eine bequeme Handhabung gestattet.

Vorteilhafte Weiterbildungen der Erfindung gehen aus den Unteransprüchen hervor.

Die Hakenabschnitte sind zweckmäßigerweise so ausgebildet, dass der Verhakungseingriff eine gegenseitige Verriegelung von Ventileinheit und Ventilträger sowohl rechtwinkelig als auch parallel zu der Montagefläche hervorruft. Zum Herstellen des Verhakungseingriffes werden die beiden aneinander zu befestigenden Komponenten in Schräglage aneinander angesetzt und anschließend verschwenkt, bis die Ventileinheit an der Montagefläche zur Anlage gelangt.

Zweckmäßigerweise steht der erste Hakenabschnitt über die Montagefläche vor und taucht in eine Verriegelungsausnehmung an der Unterseite der Ventileinheit ein.

Vorzugsweise ist der erste Hakenabschnitt derart am Ventilträger angeordnet, dass er von der die Halteklammer aufweisenden zweiten Befestigungseinrichtung wegweist. Das Einhaken der Ventileinheit kann hierbei von derjenigen Seite her stattfinden, zu der hin der erste Hakenabschnitt orientiert ist.

Das Einschwenken der Ventileinheit wird begünstigt, wenn der erste Hakenabschnitt an der der Ventileinheit zugewandten Oberseite konvex gewölbt ist.

Durch eine Anschlageinrichtung kann verhindert werden, dass die Ventileinheit im an den Ventilträger angesetzten Zustand beim Anstecken der Halteklammer unbeabsichtigt verschoben wird. Die Anschlageinrichtung kann insbesondere mindestens einen an der Ventileinheit angeordneten Anschlagvorsprung aufweisen, der vor eine entgegen der Ansteckrichtung der Halteklammer weisende Anschlagfläche des Ventilträgers ragt.

Die Klemmabschnitte am Ventilträger und an der Ventileinheit sind insbesondere so ausgebildet, dass ein Anstecken der Halteklammer in einer zu der Montagefläche parallelen Ansteckrichtung mit in der Ansteckrichtung orientierter Klammeröffnung möglich ist.

Die Ansteckrichtung verläuft insbesondere parallel zu einer Linie, die sich mit zu der Montagefläche paralleler Ausrichtung zwischen den beiden Befestigungseinrichtungen erstreckt.

Die Halteklammer kann im an die Baugruppe angesteckten Zustand allein aufgrund ihrer Vorspannung, reibungsbedingt, lagegesichert sein. Eine erhöhte Sicherheit gegen versehentliches Lösen lässt sich gewährleisten, indem Verriegelungsmittel vorhanden sind, die eine formschlüssige lösbare Lagesicherung der angesteckten Halteklammer bezüglich der ventileinheit und/oder des Ventilträgers gewährleisten.

Die Verriegelungsmittel sind insbesondere als Rastmittel ausgeführt, die beim Anstecken der Halteklammer selbsttätig einrasten. Der Rasteingriff ist hierbei vorzugsweise so ausgeführt, dass er sich überwinden lässt, wenn an der Halteklammer in beabsichtigter Weise eine der Ansteckrichtung entgegengesetzte Löse-Zugkraft angreift, insbesondere aufgebracht durch ein geeignetes Lösewerkzeug.

Die Ventileinheit ist zweckmäßigerweise mit mindestens einem elektrisch betätigbaren Ventil ausgestattet, bei dem es sich insbesondere um ein Magnetventil oder um ein Piezo-Ventil handelt.

In dem Ventilträger verläuft zweckmäßigerweise je mindestens ein Kanal, der im Bereich der Montagefläche ausmündet, wo er mit einem Kanal der Ventileinheit in Verbindung steht. Mindestens eine zwischen Ventilträger und Ventileinheit zwischengefügte elastische Dichtung gewährleistet dabei einen leckagefreien Fluidübertritt. Diese Dichtung wird durch die Vorspannung der Halteklammer verformt und zusammengepresst.

Die Komponenten der beiden Befestigungseinrichtungen können seitens der Ventileinheit insbesondere an einer Grundplatte angeordnet sein, die mit mindestens einem Ventil bestückt ist.

Der Ventilträger kann über mehrere in einer Reihe nebeneinander angeordnete Montageflächen verfügen, die jeweils mit einer Ventileinheit bestückbar oder bestückt sind, wobei die Befestigung mittels der geschilderten Befestigungseinrichtungen stattfindet.

Nicht benötigte Montageplätze können durch eine anstelle einer Ventileinheit installierbare Abdeckung abgedeckt werden, an der solche Komponenten der Befestigungseinrichtungen vorgesehen sind, die denjenigen an der Ventileinheit entsprechen.. Ihre Befestigung an einem Ventilträger kann dadurch in gleicher Weise erfolgen wie bei einer Ventileinheit. Durch die Abdeckung werden zweckmäßigerweise an der Montagefläche ausmündende Ventilträgerkanäle fluiddicht abgesperrt.

Der Ventilträger kann von einer mit mehreren Ventileinheiten bestückten oder bestückbaren Verteilerplatte gebildet sein. Ebenso kann es sich bei dem Ventilträger beispielsweise um das Gehäuse eines Fluidgerätes handeln, beispielsweise das Gehäuse eines Ventils oder eines fluidbetätigten Antriebes.

Nachfolgend wird die Erfindung anhand der beiliegenden Zeichnung näher erläutert. In dieser zeigen:
- Figur 1: eine bevorzugte erste Bauform der erfindungsgemäßen Ventilanordnung in einer perspektivischen Darstel- lung,
- Figur 2: eine Einzeldarstellung des bei der Ventilanordnung gemäß Figur 1 vorhandenen Ventilträgers,
- Figur 3: einen Querschnitt durch die Anordnung aus Figur 1 gemäß Schnittlinie III-III,
- Figur 4: in einer mit Figur 3 vergleichbaren Schnittdarstel- lung einen Zustand der Ventilanordnung während der Montage einer Ventileinheit,
- Figur 5: den in Figur 3 markierten Ausschnitt V der Ventil- einheit in einer perspektivischen Unteransicht,
- Figur 6: die Anordnung aus Figur 5 bei noch nicht angesteck- ter Halteklammer,
- Figur 7: eine Unteransicht des in Figur 5 gezeigten Aus- schnittes mit Blickrichtung gemäß Pfeil VII, wobei der umkreiste Ausschnitt zusätzlich vergrößert ab- gebildet ist,
- Figur 8: eine perspektivische Einzeldarstellung der Halte- klammer,
- Figur 9: eine Vorderansicht der Halteklammer aus Figur 8 mit Blickrichtung gemäß Pfeil IX auf die Klammeröffnung und
- Figur 10: in teils schematischer Darstellung eine weitere Ausführungsform der Ventilanordnung.

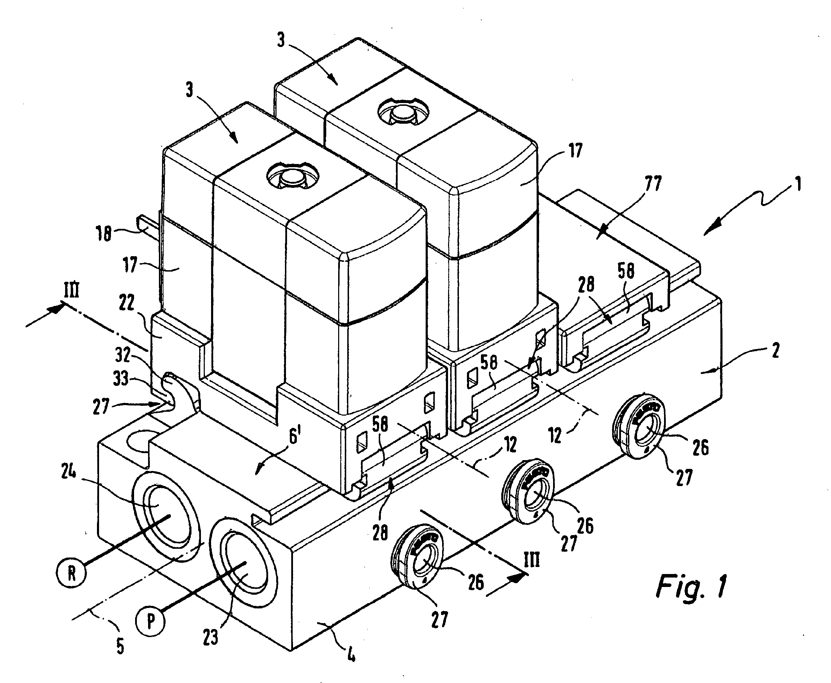

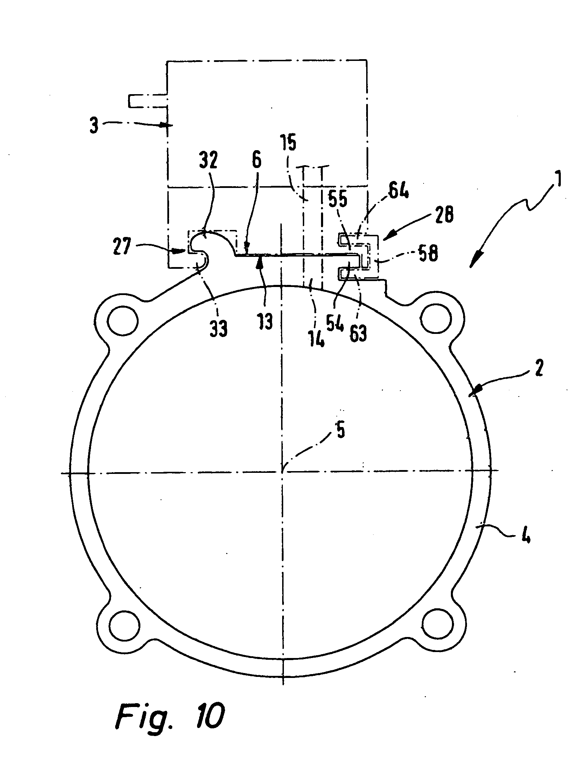

Die in ihrer Gesamtheit mit Bezugsziffer 1 bezeichnete Ventilanordnung enthält einen Ventilträger 2 und mindestens eine bevorzugt lösbar daran montierbare oder montierte Ventileinheit 3. Bei dem Ausführungsbeispiel der Figur 10 ist eine Bestückung mit nur einer einzigen Ventileinheit 3 vorgesehen. Das Ausführungsbeispiel der Figuren 1 bis 9 ermöglicht eine gleichzeitige Bestückung mit mehr als einer Ventileinheit 3, wobei exemplarisch eine Bestückung mit insgesamt drei Ventileinheiten 3 möglich ist.

Der Ventilträger 2 enthält einen bevorzugt längliche Gestalt aufweisenden Ventilträgerkörper 4 mit einer Ventilträger-Längsachse 5. An der Außenfläche des Ventilträgerkörpers 4 ist eine der Anzahl der gleichzeitig montierbaren Ventileinheiten 3 entsprechende Anzahl von Montageflächen 6 ausgebildet, an die jeweils eine Ventileinheit 3 unter Bildung einer im Folgenden vereinfacht nur als "Baugruppe" bezeichneten Ventileinheit-Ventilträger-Baugruppe ansetzbar ist.

Bei der Mehrfachausstattung an Montageflächen 6 gemäß Figuren 1 bis 9 ist insbesondere vorzusehen, dass besagte Montageflächen 6 in der Richtung der Ventilträger-Längsachse 5 aufeinanderfolgend an ein und derselben Außenfläche des Ventilträgerkörpers 4 ausgebildet sind. Der Ventilträgerkörper 4 ist mit einer bevorzugt ebenen Bestückungsfläche 6' verstehen, die in die gewünschte Anzahl von Montageflächen 6 unterteilt ist.

Jede Montagefläche 6 verfügt über eine Hauptachse 8, bei der es sich exemplarisch um die Längsachse der Montagefläche 6 handelt. Bevorzugt sind die Montageflächen 6 so ausgerichtet, dass ihre Hauptachsen 8 rechtwinkelig zur Ventilträger-Längsachse 5 verlaufen.

Die Ventileinheiten 3 besitzen ebenfalls eine Hauptachse 12. Diese fällt zweckmäßigerweise mit der Längsachse der betreffenden Ventileinheit 3 zusammen. Im zusammengebauten Zustand der Ventilanordnung 1 verlaufen die Hauptachsen 8, 12 parallel zueinander.

Jede Ventileinheit 3 ist derart an den Ventilträgerkörper 4 ansetzbar, dass eine an ihrer Unterseite vorgesehene Bodenfläche 13 auf der zugeordneten Montagefläche 6 zu liegen kommt. Montagefläche 6 und Bodenfläche 13 sind insbesondere eben ausgebildet.

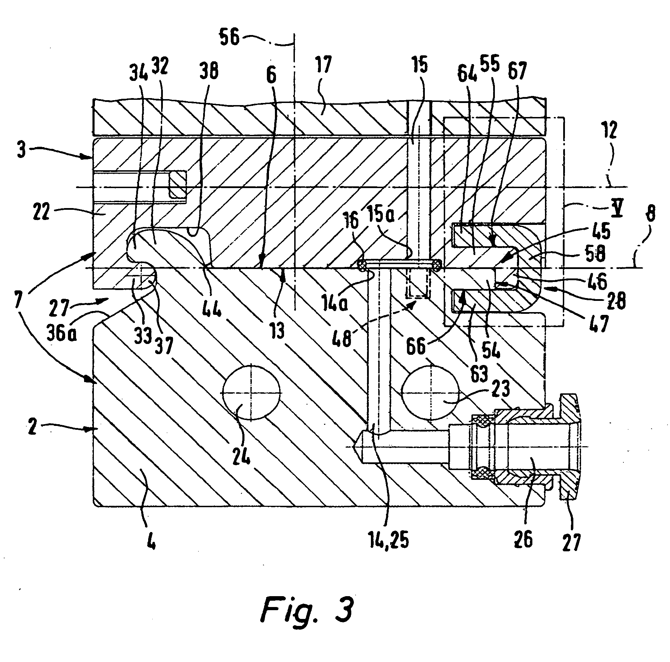

Zu jeder Montagefläche 6 mündet mindestes ein im Ventilträger 2 verlaufender Ventilträgerkanal 14 aus. Exemplarisch sind jeder Montagefläche 6 drei dort ausmündende Ventilträgerkanäle 14 zugeordnet, wobei aber in den Abbildungen der Figuren 3, 4 und 10 je nur ein solcher Ventilträgerkanal 14 ersichtlich ist. Die an der Montagefläche 6 liegenden Kanalmündungen sind mit Bezugsziffer 14a bezeichnet.

In jeder Ventileinheit 3 verläuft mindestens ein Ventilkanal 15, der mit einer Kanalmündung 15a zur Bodenfläche 13 ausmündet. Exemplarisch entspricht die Anzahl der an der Bodenfläche 13 ausmündenden Ventilkanäle 15 der Anzahl der an der zugeordneten Montagefläche 6 ausmündenden Ventilträgerkanäle 14. Die Anordnung ist so getroffen, dass bei an die Montagefläche 6 angebauter Ventileinheit 3 die Ventilkanäle 15 und Ventilträgerkanäle 14 im Bereich der Bodenfläche 13 und Montagefläche 6 paarweise miteinander verbunden sind. Um einen leckagefreien Fluidübertritt zu ermöglichen, sind die miteinander kommunizierenden Paare von Kanalmündungen 14a, 15a von je einer gummielastischen Dichtung 16 umrahmt, die zwischen Montagefläche 6 und Bodenfläche 13 platziert ist.

Jede Ventileinheit 3 beinhaltet mindestens ein elektrisch betätigbares, zur Steuerung von Fluidströmen geeignetes Ventil 17. In Figur 1 ist einer der Anschlusskontakte 18 sichtbar, über die die Ventile 17 ihre elektrischen Betätigungssignale erhalten. Zweckmäßigerweise umfasst jede Ventileinheit 3 eine die Bodenfläche 13 definierende Grundplatte 22, an der das zugehörige mindestens eine Ventil 17 lösbar befestigt ist. Andere Bauformen der Ventileinheiten 3 sind aber ebenfalls möglich.

Bei dem Ventil 17 handelt es sich exemplarisch um ein Magnetventil. Denkbar wäre aber beispielsweise auch ein Piezo-Ventil. Es kann sich bei den Ventilen um direktgesteuerte oder auch um vorgesteuerte Ventile handeln.

In Abhängigkeit vom Betriebszustand einer Ventileinheit 3 werden die dieser zugeordneten Ventilkanäle 15 und mithin die damit kommunizierenden Ventilträgerkanäle 14 in unterschiedlichem Muster miteinander verbunden.

Bei dem Ausführungsbeispiel der Figuren 1 bis 9 ist der Ventilträger 2 als Verteilerplatte zur Fluidverteilung ausgebildet. Sie ist von mindestens einem mit einer Druckquelle P verbindbaren Speisekanal 23 und mindestens einem dazu parallelen, mit eine Drucksenke R verbindbaren Entlastungskanal 24 parallel zu der Ventilträger-Längsachse 5 durchsetzt, wobei jeder dieser beiden Kanäle 23, 24 zu jeder Montagefläche 6 ausmündet. Außerdem geht von jeder Montagefläche 6 mindestens ein individueller, als Arbeitskanal 25 konzipierter Ventilträgerkanal 14 ab, der über eine Anschlussöffnung 26 zu einer Außenfläche des Ventilträgerkanals 14 ausmündet, wo durch zugeordnete Anschlussmittel 27 die Möglichkeit gegeben ist, eine zu einem anzusteuernden Verbraucher führende Fluidleitung lösbar anzuschließen. Die Ventilanordnung 1 repräsentiert hier also insgesamt eine Ventilbatterie.

Bei dem Ausführungsbeispiel der Figur 10 ist der Ventilträger 2 vom Gehäuse eines Fluidgerätes gebildet, beispielsweise vom Gehäuse eines Ventils oder eines fluidbetätigten Antriebes. Handelt es sich um ein Ventilgehäuse, fungiert die mindestens eine Ventileinheit 3 insbesondre als Vorsteuerventil. Bei einer Ausgestaltung als fluidbetätigter Antrieb wird über die mindestens eine Ventileinheit 3 der Betriebszustand des fluidbetätigten Antriebes vorgegeben.

Allen Bauformen des Ventilträgers 2 ist die Art und Weise der daran erfolgenden Befestigung einer Ventileinheit 3 gemeinsam. Diese wird nachfolgend, insbesondere unter Bezugnahme auf die Figuren 1 bis 9, näher erläutert.

Jede Ventileinheit 3 ist mittels zweier in der Achsrichtung der Hauptachsen 8, 12 zueinander beabstandeter erster und zweiter Befestigungseinrichtungen 27, 28 in bevorzugt lösbarer Weise an einer Montagefläche 6 unter Abdichtung des Fluidüberganges zwischen den Ventilträgerkanälen 14 und den Ventilkanälen 15 festlegbar.

Die erste Befestigungseinrichtung 27 verfügt über einen ortsfest am Ventilträger 2 angeordneten ersten Hakenabschnitt 32. Er begrenzt die Montagefläche 6 an einer ihrer beiden in Richtung der Hauptachse 8 orientierten Stirnseiten, Wobei er zweckmäßigerweise, zur Ventileinheit 3 hin, über die Montagefläche 6 vorsteht. Der erste Hakenabschnitt 32 weist mit seinem freien Ende 34 zweckmäßigerweise von der zweiten Befestigungseinrichtung 28 weg.

Bevorzugt ist der erste Hakenabschnitt 32 bogenförmig gekrümmt. Er weist insbesondere eine der Ventileinheit 3 zugewandte, konvex gewölbte Oberfläche 35 auf.

Auf der der Montagefläche 6 entgegengesetzten Seite des ersten Hakenabschnittes 32 ist der Ventilträgerkörper 4 zweckmäßigerweise mit einer Aussparung 36 versehen, die tiefer reicht als die Montagefläche 6, vorzugsweise mit einer von der Montagefläche 6 weg schräg abfallenden Grundfläche 36a.

Der erste Hakenabschnitt 32 kooperiert mit einem gestalterisch daran angepassten zweiten Hakenabschnitt 33 der ersten Befestigungseinrichtung 27, der ortsfest an der Ventileinheit 3 angeordnet ist.

Der zweite Hakenabschnitt 33 schließt sich in Richtung der Hauptachse 12 mit Abstand an die Bodenfläche 13 an, wobei sein freies Ende 37 der zweiten Befestigungseinrichtung 28 zugewandt ist, also entgegengesetzt zum freien Ende 34 des ersten Hakenabschnittes 32 orientiert ist.

Zwischen dem zweiten Hakenabschnitt 33 und der Bodenfläche 13 befindet sich eine in der Ventileinheit 3 ausgebildete, nach unten offene Verriegelungsausnehmung 38, in die der erste Hakenabschnitt 32 eintauchen kann, um mit dem zweiten Hakenabschnitt 33 in Verhakungseingriff zu gelangen. Wie die Bodenfläche 13 und der zweite Hakenabschnitt 33 befindet sich folglich auch die Verriegelungsausnehmung 38 an der dem Ventilträger 2 zugewandten Unterseite der Ventileinheit 3.

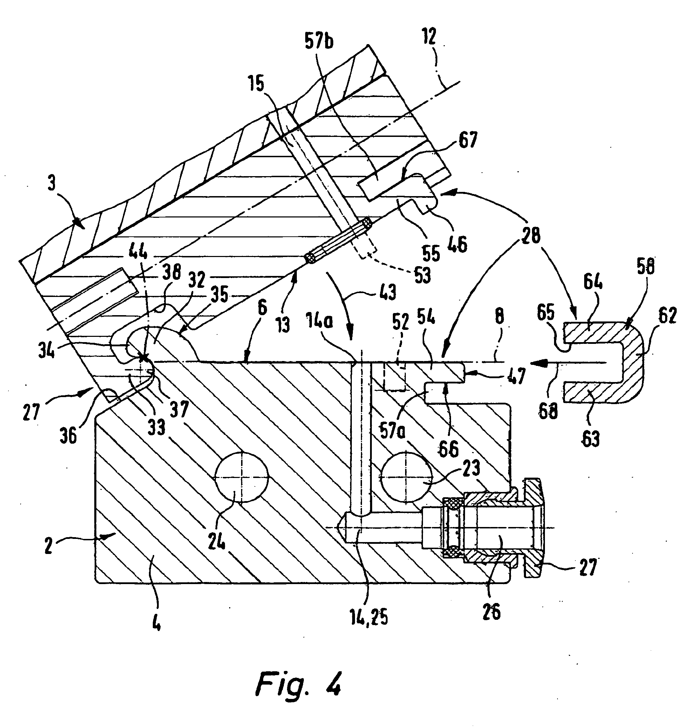

Die in Richtung der Hauptachse 12 gemessene Breite der Öffnung 42 der Verriegelungsausnehmung 38 ist geringer als die in gleicher Richtung gemessenen Breitenabmessungen des ersten Hakenabschnittes 32. Somit lässt sich die Ventileinheit 3 nicht geradlinig rechtwinkelig zur Montagefläche 6 an Letztere ansetzen. Das Herstellen des Verhakungseingriffes geschieht vielmehr in der aus Figur 4 ersichtlichen Weise, indem die Ventileinheit 3 mit bezüglich der Hauptachse 8 geneigter Hauptachse 12 von der der zweiten Befestigungseinrichtung 28 entgegengesetzten Seite her an den Ventilträger 2 angesetzt wird, wobei der erste Hakenabschnitt 32 durch die Öffnung 42 hindurch in die sich anschließend verbreiternde Verriegelungsausnehmung 38 eingefädelt wird. Die Aussparung 36 ermöglicht hierbei die erforderliche Schrägstellung des zweiten Hakenabschnittes 33.

Sind die beiden Hakenabschnitte 32, 33 in dieser zwischen Ventileinheit 3 und Ventilträger 2 eingenommenen Schräglage ineinander eingehängt, lässt sich die Ventileinheit 3 gemäß Pfeil 43 an den Ventilträger 2 heranschwenken, bis ihre Bodenfläche 13 zumindest annähernd an der Montagefläche 6 anliegt. Die gedachte Schwenkachse 44 für die Schwenkbewegung 43 verläuft parallel zur Montagefläche 6 und zugleich rechtwinkelig zu der Hauptachse 8 und befindet sich im Eingriffsbereich der beiden Hakenabschnitte 32, 33.

Die beiden Hakenabschnitte 32, 33 sind fest an der Ventileinheit 3 beziehungsweise am Ventilträger 2 angeordnet, wobei es sich insbesondere um jeweils einstückige Komponenten dieser Bauteile handeln kann. Exemplarisch ist der erste Hakenabschnitt 32 einstückig an dem Ventilträgerkörper 4 angeformt und der zweite Hakenabschnitt 33 einstückig an der Grundplatte 22 oder einem sonstigen Gehäuseteil der Ventileinheit 3.

Durch das Heranschwenken der Ventileinheit 3 an die Montagefläche 6 gemäß Pfeil 43 hintergreifen sich nicht nur die beiden Hakenabschnitte 32, 33, sondern es taucht überdies der erste Hakenabschnitt 32 in die Verriegelungsausnehmung 38 ein. Einmal derart eingetaucht, ergibt sich eine gewisse Verriegelung der aus Ventileinheit 3 und Ventilträger 2 zusammengesetzten Baugruppe in der Richtung der Hauptachsen 8, 12. Nur durch Zurückschwenken der Ventileinheit 3 entgegen der Schwenkrichtung 43 lässt sie sich wieder vom Ventilträger 2 entfernen.

Als alternative oder zusätzliche Maßnahme zur Sicherung der Relativposition zwischen Ventilträger 2 und daran angesetzter Ventileinheit 3 in der Richtung der Hauptachsen 8, 12 kann eine Anschlageinrichtung 45 vorhanden sein. Diese verhindert insbesondere ein Verschieben der Ventileinheit relativ zum Ventilträger 2 in Richtung zur zweiten Befestigungseinrichtung 27.

Exemplarisch enthält die Anschlageinrichtung 45 einen im Bereich der zweiten Befestigungseinrichtung 28 an der Ventileinheit 3 angeordneten, nach unten ragenden Anschlagvorsprung 46, der über die Bodenfläche 13 vorsteht. Er ragt bei an der Montagefläche 6 anliegender Ventileinheit 3 vor eine der ersten Befestigungseinrichtung 27 abgewandte Anschlagfläche 47 des Ventilträgerkörpers 4, sodass die Ventileinheit 3 blockiert ist. Durch die Anschlageinrichtung 45 einerseits und die erste Befestigungseinrichtung 27 andererseits ist folglich eine formschlüssige Lagefixierung zwischen Ventilträger 2 und daran angesetzter Ventileinheit 3 in der Richtung der Hauptachse 8, 12 in beiden Richtungen erzielt.

Es kann zweckmäßig sein, eine Fixierung der aneinander angesetzten Komponenten 3, 2 auch rechtwinkelig zu den Hauptachsen 8, 12, vorliegend in Richtung der Ventilträger-Längsachse 5, vorzusehen. Dies gewährleistet eine automatische zielgerichtete Zuordnung der miteinander zu verbindenden Ventilträgerkanäle 14 und Ventilkanäle 15 beim Ansetzen der Ventileinheit 3. Die Positionssicherung wird insbesondere durch einen formschlüssigen Eingriff zwischen Ventilträger 2 und Ventileinheit 3 bewirkt.

Exemplarisch sind geeignete Positionssicherungsmittel 48 mit einer in die Montagefläche 6 eingelassenen Positioniervertiefung 52 versehen, in die ein an der Bodenfläche 13 der Ventileinheit 3 vorstehender Positioniervorsprung 53 bei der Schwenkbewegung 43 formschlüssig eintaucht. Bei Bedarf können mehrere Paare solcher Positioniervertiefungen 52 und Positioniervorsprünge 53 vorhanden sein. Es besteht auch die Möglichkeit, die Positioniervertiefung 52 an der Ventileinheit 3 und den Positioniervorsprung 53 am Ventilträger 2 auszubilden.

Durch die zweite Befestigungseinrichtung 28 kann die Baugruppe 7 in ihrer aneinander angesetzten Relativlage fixiert werden.

Zu der zweiten Befestigungseinrichtung 28 gehören ein am Ventilträger 2 angeordneter erster Klemmabschnitt 54 und ein an der Ventileinheit 3 angeordneter zweiter Klemmabschnitt 55, die sich in einer zur Montagefläche 6 rechtwinkeligen Höhenrichtung 56 gegenüberliegen, wenn die Ventileinheit 3 an den Ventilträger 2 herangeschwenkt ist. Die beiden Klemmabschnitte 54, 55 können hierbei insbesondere unmittelbar aneinander anliegen.

Die Klemmabschnitte 54, 55 befinden sich am Rand der Montagefläche 6 beziehungsweise der Bodenfläche 13, wobei sie einen Abschnitt derselben aufweisen können. Sie ragen in Richtung der Hauptachsen 8, 12 von der ersten Befestigungseinrichtung 27 weg, wobei sich an ihren in der Höhenrichtung 56 voneinander wegweisenden Seiten je ein Freiraum 57a, 57b befindet, der insbesondere von einer zu der der Befestigungseinrichtung 27 entgegengesetzten Vorderseite hin offenen Aussparung des Ventilträgers 2 beziehungsweise der Ventileinheit 3 gebildet sein kann.

Die oben erwähnte Anschlageinrichtung 45 ist zweckmäßigerweise an den beiden Klemmabschnitten 54, 55 ausgebildet.

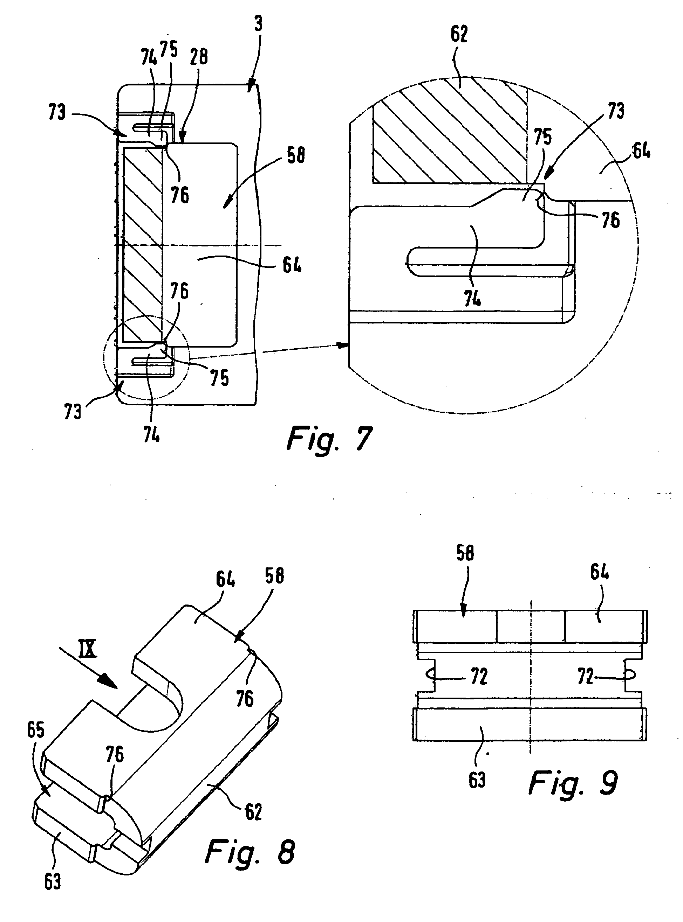

Als weitere Komponente enthält die zweite Befestigungseinrichtung 28 eine U-förmige Halteklammer 58, die in Figuren 8 und 9 nochmals separat abgebildet ist.

Die Halteklammer 58 enthält zwei von einem sie verbindenden Stegabschnitt 62 in die gleiche Richtung wegragende Klemmschenkel 63, 64, mit einer von den Klemmschenkeln 63, 64 an der dem Stegabschnitt 62 gegenüberliegenden Vorderseite begrenzten Klammeröffnung 65. Die Halteklammer 58 ist ein eigenständiges Bauteil, das erst an die Baugruppe 7 angebracht wird, nachdem der Verhakungsvorgang abgeschlossen und die Bodenfläche 13 an die Montagefläche 6 herangeschwenkt ist. Der lichte Abstand zwischen den beiden Klemmschenkeln 63, 64 ist im noch nicht montierten Zustand der Halteklammer 58 etwas geringer als der im fest installierten Zustand der Ventileinheit 3 vorhandene Abstand zwischen den dem benachbarten Freiraum 57a, 57b zugewandten Beaufschlagungsflächen 66, 67 der beiden Klemmabschnitte 54, 55.

Zur Montage wird die Halteklammer 58 mit ihrer Klammeröffnung 65 voraus in einer Ansteckrichtung 68 derart an die Baugruppe 7 angesteckt, dass je ein Klemmschenkel 63, 64 einen der beiden Klemmabschnitte 54, 55 an der dem Freiraum 57a, 57b zugewandten Seite übergreift. Hierbei findet eine geringfügige federelastische Aufweitung der Halteklammer 58 statt, die zur Folge hat, dass die Klemmschenkel 63, 64 unter Vorspannung an den Beaufschlagungsflächen 66, 67 anliegen und somit die Ventileinheit 3 in Richtung der Hochachse 56 fest mit dem Ventilträger 2 verspannen.

Bei diesem Spannvorgang wird gleichzeitig auch die mindestens eine elastische Dichtung 16 zwischen der Montagefläche 6 und der Bodenfläche 13 verpresst, sodass eine hohe Dichtheit gewährleistet ist.

Ersichtlich erfolgt eine voneinander unabhängige Handhabung der beiden Befestigungseinrichtungen 27, 28. Beide Handhabungsmaßnahmen können problemlos von der die zweite Befestigungseinrichtung 28 aufweisenden Vorderseite der Ventilanordnung 1 her durchgeführt werden, sodass sich jede Ventileinheit 3 auch unter ungünstigen Platzverhältnissen relativ problemlos installieren lässt.

Die beiden Hakenabschnitte 32, 33 sind so aufeinander abgestimmt, dass sie die an die Montagefläche 6 herangeschwenkte Ventileinheit 3 in der Höhenrichtung 56 sicher festhalten. Daher ist es ausreichend, wenn die Klemmkraft beabstandet zu dem Haken-Eingriffsbereich lediglich an der zweiten Befestigungseinrichtung 28 eingeleitet wird. Für einen eventuell erforderlichen Toleranzausgleich kann die mindestens eine Dichtung 16 dienen, die so ausgelegt ist, dass die zur sicheren Abdichtung erforderliche Verpressung gegeben ist, bevor die Bodenfläche 13 an der Montagefläche 6 anliegt. Es ist insbesondere eine Bauform empfehlenswert, bei der die mindestens eine elastisch verformbare Dichtung 16 in einer Vertiefung der Bodenfläche 13 - oder auch der Montagefläche 6 - einsitzt, über die sie im noch nicht festgespannten Zustand leicht vorsteht, wie dies in Figur 4 illustriert ist.

Die Ansteckrichtung 68 der Halteklammer 58 verläuft vorzugsweise parallel zur Montagefläche 6 und insbesondere in der Richtung der Hauptachsen 8, 12. Beim Ansteckvorgang tauchen folglich die Klemmschenkel 63, 64 mit ihrer dem Stegabschnitt 62 entgegengesetzten Stirnfläche voraus in die Freiräume 57a, 57b ein.

Durch die erzielte Vorspannung ist die Halteklammer 58 ihrerseits kraftschlüssig an der Baugruppe 7 gehalten und kann nicht unbeabsichtigt entfernt werden. Gleichwohl ist ein Entfernen zum anschließenden Abnehmen einer Ventileinheit 3 ohne weiteres möglich, indem man die Halteklammer 58 mittels eines nicht weiter abgebildeten Abziehwerkzeuges wieder abzieht. An der Halteklammer 58 können zu diesem Zweck eigens angepasste Werkzeugangriffsabschnitte 72 ausgebildet sein. Als Abziehwerkzeug kommt beispielsweise eine Zange in Frage. Durch das Abziehwerkzeug kann eine entgegengesetzt zu der Ansteckrichtung 68 orientierte Löse-Zugkraft auf die Halteklammer 58 ausgeübt werden, die die Klemmkraft überwindet.

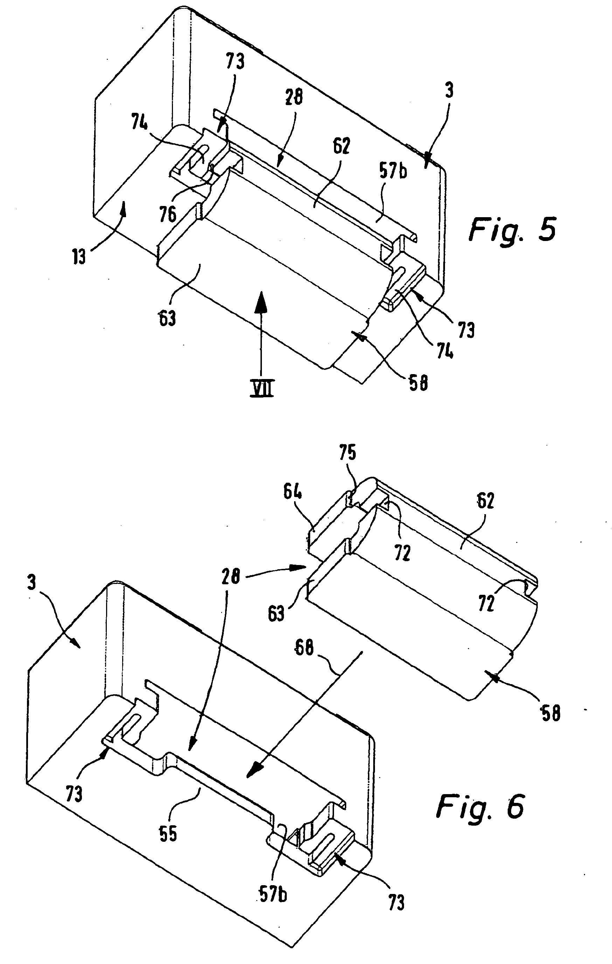

Ist die Ventilanordnung 1 im Betrieb stärkeren Erschütterungen ausgesetzt, können sich zusätzliche, auf einem Formschluss basierende Positionssicherungsmaßnahmen für die angesteckte Halteklammer 58 empfehlen. Diese Maßnahmen können insbesondere in Gestalt geeigneter Verriegelungsmittel 73 verwirklicht werden, wie sie in Figuren 5 bis 9 exemplarisch abgebildet sind. Die Verriegelungsmittel 73 gestatten ein formschlüssiges Verriegeln der angesteckten Halteklammer 58 und gestatten gleichwohl bei Bedarf das neuerliche Abziehen von der Baugruppe 7.

Um die vorgenannten Bedingungen zu erfüllen, empfiehlt sich eine Ausgestaltung der Verriegelungsmittel 73 als Rastmittel, die beim Anstecken der Halteklammer 58 selbsttätig einrasten.

Beispielhaft sind an der Ventileinheit 3 zwei federelastische Rasthaken 74 angeordnet. Sie flankieren den zugeordneten Freiraum 57b an entgegengesetzten Längsseiten und besitzen seitwärts in den Freiraum 57b hineinragende Rastvorsprünge 75. Unter vorübergehender Verbreiterung des Freiraumes 57b können sie bei Auftreten einer entsprechenden Kraft nach außen gebogen werden.

Die Halteklammer 58 verfügt an dem in den zugeordneten Freiraum 57a eintauchenden Klemmschenkel 64 längsseits außen über je eine Verriegelungsstufe 76, die insbesondere daraus resultiert, dass der zugeordnete Klemmschenkel 64 zu seinem freien Ende hin breiter ausgebildet ist als zu dem Stegabschnitt 62 hin.

Hat die Halteklammer 58 beim Anstecken die gewünschte Einstecktiefe erreicht, rasten die Rasthaken 74 mit ihren Rastvorsprüngen 75 hinter die Verriegelungsstufen 76 und verriegeln dadurch die angesteckte Halteklammer 58. Erst wenn mittels eines geeigneten Werkzeuges eine ausreichend hohe Löse-Zugkraft auf die Halteklammer 58 ausgeübt wird, lässt sich die Verriegelungskraft überwinden, und die Rasthaken 74 schwenken vorübergehend, unter Freigabe des Verriegelungseingriffes, nach außen.

Exemplarisch sind die Rasthaken 74 an der Ventileinheit 3 angeordnet. Sie könnten jedoch alternativ oder zusätzlich auch am Ventilträger 2 ausgebildet sein.

Zweckmäßigerweise sind die Rasthaken 74 einstückig mit der Grundplatte 22 oder einem anderen Gehäuseteil der Ventileinheit 3 ausgebildet.

Die Verriegelungsmittel 73 könnten anstatt mit mehreren Rasthaken 74 auch mit nur einem Rasthaken 74 ausgestattet sein. Außerdem könnten die Rastmittel auch nach anderen Verrastungsprinzipien arbeiten.

Soll eine vorhandene Montagefläche nicht mit einer Ventileinheit 3 bestückt werden, die Ventilanordnung 1 jedoch gleichwohl betrieben werden, kann an jeder Montagefläche alternativ eine aus Figur 1 ersichtliche Abdeckung 77 installiert werden. Die Abdeckung kann insbesondere als einfacher Deckel ausgebildet sein. Befestigt wird sie in gleicher Weise wie eine Ventileinheit 3, weshalb sie über die gleichen Komponenten der ersten und zweiten Befestigungseinrichtung 27, 28 verfügt wie eine Ventileinheit 3. An der der überdeckten Montagefläche 6 zugewandten Unterseite der Abdeckung 77 ist insbesondere auch mindestens eine elastische Dichtung angeordnet, durch die die Kanalmündungen 14a fluiddicht abgesperrt sind, wenn die Abdeckung 77 installiert ist.

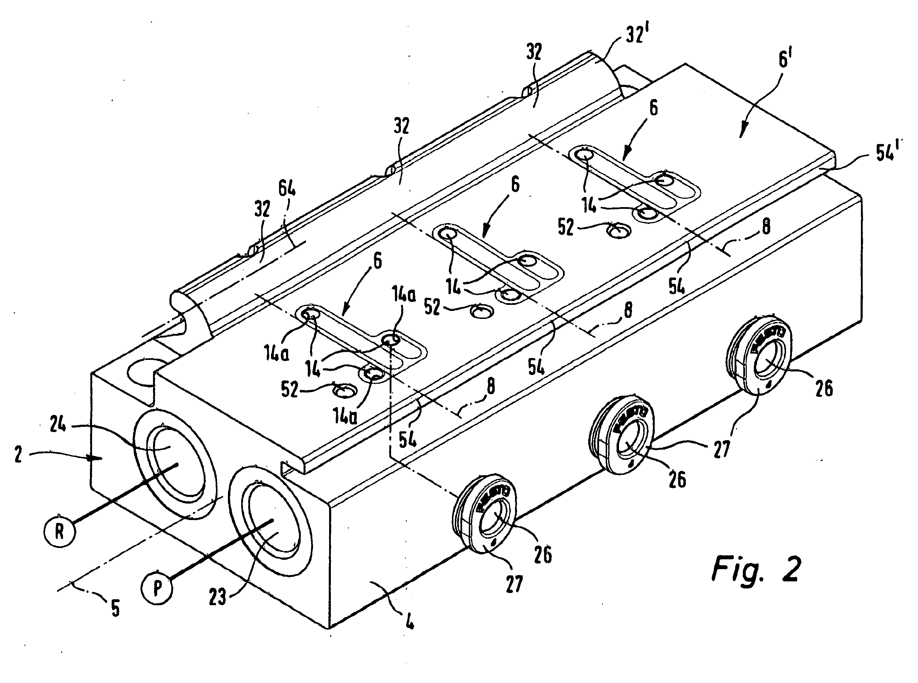

Ist der Ventilträger 2 mit mehreren nebeneinander liegenden Montageflächen 6 ausgestattet, wie dies beispielsweise aus Figur 2 hervorgeht, können die einzelnen ersten Hakenabschnitte 32 zu einer durchgehenden Hakenleiste 32' zusammengefasst sein. Auch die am Ventilträger 2 angeordneten ersten Klemmabschnitte 54 können in diesem Fall Bestandteil einer zusammenhängenden Klemmleiste 54' sein.

## Patentansprüche

1. Ventilanordnung, mit einem Ventilträger (2), der mindestens eine Montagefläche (6) für eine Ventileinheit (3) aufweist, und mit mindestens einer Ventileinheit (3), die unter Bildung einer Baugruppe (7) an die mindestens eine Montagefläche (6) ansetzbar und daran mittels zweier zueinander beabstandeter Befestigungseinrichtungen (27, 28) fixierbar ist, wobei die erste Befestigungseinrichtung (27) einen an dem Ventilträger (2) angeordneten ersten Hakenabschnitt (32) und einen zum Verhaken damit vorgesehenen ortsfesten zweiten Hakenabschnitt (33) an der Ventileinheit (3) aufweist, und wobei die zweite Befestigungseinrichtung (28) mindestens eine die Ventileinheit (3) mit dem Ventilträger (2) verspannende Halteklammer (58) enthält, **dadurch gekennzeichnet, dass** der erste Hakenabschnitt (32) ortsfest und unabhängig von der Halteklammer (58) an dem Ventilträger (2) angeordnet ist, und dass die Halteklammer (58) U-förmig mit zwei sich gegenüberliegenden Klemmschenkeln (63, 63) ausgebildet ist, wobei sie derart an die zuvor unter gegenseitigem Verhaken der Hakenabschnitte (32, 33) zusammengesetzte Baugruppe (7) ansteckbar ist, dass ihre Klemmschenkel (63, 64) je einen Klemmabschnitt (54, 55) der Ventileinheit (3) und des Ventilträgers (2) mit Vorspannung übergreifen und **dadurch** die Ventileinheit (3) gegen die Montagefläche (6) spannen.

2. Ventilanordnung nach Anspruch 1, **dadurch gekennzeichnet, dass** die erste Befestigungseinrichtung (27) in einer Weise ausgebildet ist, dass zum Verhaken der beiden Hakenabschnitte (32, 33) ein schräges Ansetzen und ein anschließendes gegenseitiges Verschwenken von Ventileinheit (3) und Ventilträger (2) erforderlich ist.

3. Ventilanordnung nach Anspruch 1 oder 2, **dadurch gekennzeichnet, dass** der Verhakungseingriff der Hakenabschnitte (32, 33) eine gegenseitige Verriegelung von Ventileinheit (3) und Ventilträger (2) sowohl rechtwinkelig als auch parallel zu der Montagefläche (6) hervorruft.

4. Ventilanordnung nach Anspruch 3, **dadurch gekennzeichnet, dass** mindestens einer der Hakenabschnitte (32) im verhakten Zustand in eine Verriegelungsausnehmung (38) der anderen Baugruppenkomponente (3) eintaucht, wobei die Verriegelungsausnehmung (38) zweckmäßigerweise an der dem Ventilträger (2) zugewandten Unterseite der Ventileinheit (3) angeordnet ist.

5. Ventilanordnung nach einem der Ansprüche 1 bis 4, **dadurch gekennzeichnet, dass** der erste Hakenabschnitt (32) über die Montagefläche (6) vorsteht.

6. Ventilanordnung nach einem der Ansprüche 1 bis 5, **dadurch gekennzeichnet, dass** der am Ventilträger (2) angeordnete erste Hakenabschnitt (32) von der zweiten Befestigungseinrichtung (28) wegweist, wobei der erste Hakenabschnitt (32) an der der Ventileinheit (3) zugewandten Oberseite zweckmäßigerweise konvex gewölbt ausgebildet ist, um der Ventileinheit (3) das Darüber-hinweg-Verschwenken beim Verhakungsvorgang zu ermöglichen.

7. Ventilanordnung nach einem der Ansprüche 1 bis 6, **gekennzeichnet durch** eine Anschlageinrichtung (45), die bei zusammengesetzter Baugruppe (7) ein Verschieben der Ventileinheit (3) relativ zum Ventilträger (2) in der Ansteckrichtung (68) der Halteklammer (58) verhindert, wobei die Anschlageinrichtung (45) an der Ventileinheit (3) zweckmäßigerweise mindestens einen vor eine entgegen der Ansteckrichtung (68) der Halteklammer (58) weisende Anschlagfläche (57) des Ventilträgers (2) ragenden Anschlagvorsprung (46) aufweist.

8. Ventilanordnung nach einem der Ansprüche 1 bis 7, **dadurch gekennzeichnet, dass** die Klemmabschnitte (54, 55) so ausgebildet sind, dass die Halteklammer (58) in einer zur Montagefläche (6) parallelen Ansteckrichtung (68) mit in der Ansteckrichtung (68) weisender Klammeröffnung (65) an die Baugruppe (7) ansteckbar ist, wobei die Ansteckrichtung (68) zweckmäßigerweise parallel zu einer sich zwischen den beiden Befestigungseinrichtungen (27, 28) erstreckenden, zu der Montagefläche (6) parallelen Linie (8) verläuft.

9. Ventilanordnung nach einem der Ansprüche 1 bis 8, **dadurch gekennzeichnet, dass** die beiden Klemmabschnitte (54, 55) von der ersten Befestigungseinrichtung (27) wegragen.

10. Ventilanordnung nach einem der Ansprüche 1 bis 9, **dadurch gekennzeichnet, dass** Verriegelungsmittel (73) vorhanden sind, durch die die Halteklammer (58) im an die Baugruppe (7) angesteckten Zustand formschlüssig lösbar lagegesichert ist, wobei die Verriegelungsmittel (73) zweckmäßigerweise einerseits an der Halteklammer (58) und andererseits an der Ventileinheit (3) angeordnet sind.

11. Ventilanordnung nach Anspruch 10, **dadurch gekennzeichnet, dass** die Verriegelungsmittel (73) als Rastmittel ausgeführt sind, die beim Anstecken der Halteklammer (58) selbsttätig einrasten.

12. Ventilanordnung nach Anspruch 11, **dadurch gekennzeichnet, dass** die Verriegelungsmittel (73) mindestens einen an der Baugruppe (7) angeordneten federelastischen Rasthaken (74) enthalten, der bei angesteckter Halteklammer (58) eine an dieser angeordnete Verriegelungsstufe (76) hintergreift und der bei Ausüben einer der Ansteckrichtung (68) entgegengesetzten Löse-Zugkraft auf die Halteklammer (58) durch das Zusammenwirken mit der Verriegelungsstufe (76) in eine das Abziehen der Halteklammer (58) gestattende Entriegelungsstellung bewegbar ist, wobei zweckmäßigerweise zwei entgegengesetzten Längsseiten der Halteklammer (58) zugeordnete Rasthaken (74) vorhanden sind.

13. Ventilanordnung nach Anspruch 12, **dadurch gekennzeichnet, dass** der mindestens eine Rasthaken (74) an der Ventileinheit (3) angeordnet ist.

14. Ventilanordnung nach einem der Ansprüche 1 bis 13, **dadurch gekennzeichnet, dass** an der Halteklammer (58) mindestens ein Werkzeugangriffsabschnitt (72) ausgebildet ist, der ein Ansetzen eines das Abziehen der Halteklammer (58) von der Baugruppe (7) ermöglichenden Abziehwerkzeuges gestattet.

15. Ventilanordnung nach einem der Ansprüche 1 bis 14, **dadurch gekennzeichnet, dass** die Ventileinheit (3) mindestens ein elektrisch betätigbares Ventil (17) aufweist, insbesondere ein elektromagnetisch betätigbares Ventil.

16. Ventilanordnung nach einem der Ansprüche 1 bis 15, **dadurch gekennzeichnet, dass** im Ventilträger (2) mindestens ein an der Montagefläche (6) ausmündender Ventilträgerkanal (14) verläuft, der bei montierter Ventileinheit (3) mit mindestens einem an der gegenüberliegenden Unterseite der Ventileinheit (3) ausmündenden, in der Ventileinheit (3) verlaufenden Ventilkanal (15) kommuniziert, wobei zwischen der Ventileinheit (3) und dem Ventilträger (2) Zweckmäßigerweise mindestens eine elastische Dichtung (16) zur Abdichtung der Kanalverbindung zwischen mindestens einem Ventilträgerkanal (14) und mindestens einem Ventilkanal (15) angeordnet ist, die bei angesteckter Halteklammer (58) zwischen Ventileinheit (3) und Ventilträger (2) verspannt ist.

17. Ventilanordnung nach einem der Ansprüche 1 bis 16, **dadurch gekennzeichnet, dass** die der Ventileinheit (3) zugeordneten Komponenten der beiden Befestigungseinrichtungen (27, 28) an einer mit mindestens einem Ventil (17) ausgestatteten Grundplatte (22) der Ventileinheit (3) angeordnet sind.

18. Ventilanordnung nach einem der Ansprüche 1 bis 17, **gekennzeichnet durch** formschlüssig ineinander eingreifende Positionssicherungsmittel (48) am Ventilträger (2) und an der Ventileinheit (3) zur Positionssicherung dieser Komponenten quer zu einer sich zwischen den beiden Befestigungseinrichtungen (27, 28) erstreckenden Linie (8).

19. Ventilanordnung nach einem der Ansprüche 1 bis 18, **dadurch gekennzeichnet, dass** an dem Ventilträger (2) mehrere in einer Reihe nebeneinander angeordnete, mit je einer Ventileinheit (3) bestückbare oder bestückte Montageflächen (6) angeordnet sind.

20. Ventilanordnung nach einem der Ansprüche 1 bis 19, **gekennzeichnet durch** mindestens eine anstelle einer Ventileinheit (3) an einer Montagefläche (6) installierbare Abdeckung (77), die mit Komponenten der Befestigungseinrichtungen (27, 28) ausgestattet ist, die denjenigen einer Ventileinheit (3) entsprechen.

21. Ventilanordnung nach einem der Ansprüche 1 bis 20, **dadurch gekennzeichnet, dass** der Ventilträger (2) von einer mit mehreren Ventileinheiten (3) bestückten oder bestückbaren Verteilerplatte gebildet ist oder vom Gehäuse eines Fluidgerätes, beispielsweise vom Gehäuse eines Ventils oder eines fluidbetätigten Antriebes.

22. Ventilanordnung nach einem der Ansprüche 1 bis 21, **dadurch gekennzeichnet, dass** die Halteklammer (58) aus federelastischem Material besteht, insbesondere aus Metall.

## Claims

1. Valve assembly comprising a valve support (2) having at least one mounting surface (6) for a valve unit (3) and at least one valve unit (3) which can be fitted to the at least one mounting surface (6) and secured thereto by means of two mounting devices (27, 28) arranged at a distance from one another while forming an assembly (7), wherein the first mounting device (27) has a first hook section (32) provided on the valve support (2) and a fixed second hook section (33) on the valve unit (3) provided for hooking into the first hook section, and wherein the second mounting device (28) comprises at least one retaining clip (58) clamping the valve unit (3) to the valve support (2), **characterised in that** the first hook section (32) is in a fixed position and independent of the retaining clip (58) on the valve support (2), and **in that** the retaining clip (58) is U-shaped with two opposed clamping legs (63, 63), wherein it can be fitted to the assembly (7) which has previously been assembled by means of the mutual engagement of the hook sections (32, 33) in such a way that each of its clamping legs (63, 64) laps a clamping section (54, 55) of the valve unit (3) and the valve support (2) under preload, thereby clamping the valve unit (3) against the mounting surface (6).

2. Valve assembly according to claim 1, **characterised in that** the first mounting device (27) is designed such that an oblique approach followed by a mutual swivelling of the valve unit (3) and the valve support (2) is required to engage the two hook sections (32, 33).

3. Valve assembly according to claim 1 or 2, **characterised in that** the hooking engagement of the hook sections (32, 33) causes a mutual locking of the valve unit (3) and the valve support (2) both at right angles to and parallel to the mounting surface (6).

4. Valve assembly according to claim 3, **characterised in that** at least one of the hook sections (32) dips into a locking recess (38) of the other assembly component (3) in the engaged state, the locking recess (38) being expediently located on the underside of the valve unit (3) facing the valve support (2).

5. Valve assembly according to any of claims 1 to 4, **characterised in that** the first hook section (32) projects beyond the mounting surface (6).

6. Valve assembly according to any of claims 1 to 5, **characterised in that** the first hook section (32) mounted on the valve support (2) extends away from the second mounting device (28), the first hook section (32) being expediently domed on the top side facing the valve unit (3) in order to enable the valve unit (3) to swivel across in the hooking process.

7. Valve assembly according to any of claims 1 to 6, **characterised by** a stop device (45) which in the completed assembly (7) prevents a displacement of the valve unit (3) relative to the valve support (2) in the fitting direction (68) of the retaining clip (58), the stop device (45) expediently comprising on the valve unit (3) at least one stop projection (46) projecting in front of a stop face (57) of the valve support (2) which faces against the fitting direction (68) of the retaining clip (58).

8. Valve assembly according to any of claims 1 to 7, **characterised in that** the clamping sections (54, 55) are designed such that the retaining clip (58) can be fitted to the assembly (7) in a fitting direction (68) which is parallel to the mounting surface (6) and with its clip opening (65) pointing in the fitting direction (68), the fitting direction (68) expediently being parallel to a line (8) which extends between the two mounting devices (27, 28) and is parallel to the mounting surface (6).

9. Valve assembly according to any of claims 1 to 8, **characterised in that** the two clamping sections (54, 55) project away from the first mounting device (27).

10. Valve assembly according to any of claims 1 to 9, **characterised in that** locking means (73) are provided for positively and releasably securing the retaining clip (58) when it has been fitted to the assembly (7), the locking means (73) being expediently located on the retaining clip (58) on the one hand and on the valve unit (3) on the other hand.

11. Valve assembly according to claim 10, **characterised in that** the locking means (73) are designed as latching means which latch automatically as the retaining clip (58) is fitted.

12. Valve assembly according to claim 11, **characterised in that** the locking means (73) include at least one resilient latching hook (74) on the assembly (7) which, when the retaining clip (58) has been fitted, engages a locking step (76) provided thereon from behind and which can, when a pulling force is applied against the fitting direction (68) to release the retaining clip (58), be moved into an unlocked position permitting the removal of the retaining clip (58), two latching hooks (74) assigned to opposite sides of the retaining clip (58) being expediently provided.

13. Valve assembly according to claim 12, **characterised in that** the at least one latching hook (74) is located on the valve unit (3).

14. Valve assembly according to any of claims 1 to 13, **characterised in that** at least one tool application section (72) for the application of a tool for pulling off the retaining clip (58) is provided on the retaining clip (58).

15. Valve assembly according to any of claims 1 to 14, **characterised in that** the valve unit (3) comprises at least one electrically operated valve (17), in particular a solenoid-operated valve.

16. Valve assembly according to any of claims 1 to 15, **characterised in that** at least one valve support passage (14) terminating at the mounting surface (6) and communicating after the fitting of the valve unit (3) with at least one valve passage (15) terminating at the oppositely-located underside of the valve unit (3) and running through the valve unit (3) extends through the valve support (2), at least one elastic seal (16) which is clamped between the valve unit (3) and the valve support (2) after the retaining clip (58) has been fitted being expediently provided between the valve unit (3) and the valve support (2) to seal the connection between at least one valve support passage (14) and at least one valve passage (15).

17. Valve assembly according to any of claims 1 to 16, **characterised in that** the components of the two mounting devices (27, 28) which are assigned to the valve unit (3) are located on a base plate (22) of the valve unit (3) which is fitted with at least one valve (17).

18. Valve assembly according to any of claims 1 to 17, **characterised by** positively engaging positioning means (48) on the valve support (2) and the valve unit (3) for positioning these components at right angles to a line (8) running between the two mounting devices (27, 28).

19. Valve assembly according to any of claims 1 to 18, **characterised in that** several mounting surfaces (6) arranged side by side, each of which can be or is fitted with a valve unit (3), are provided on the valve support (2).

20. Valve assembly according to any of claims 1 to 19, **characterised by** at least one cover (77) which can be fitted to a mounting surface (6) in place of a valve unit (3) and which is equipped with components of the mounting devices (27, 28) which correspond to those of a valve unit (3).

21. Valve assembly according to any of claims 1 to 20, **characterised in that** the valve support (2) is represented by a manifold which is equipped or can be equipped with a plurality of valve units (3) or by the housing of a fluidic unit, for example by the housing of a valve or a fluid-operated drive.

22. Valve assembly according to any of claims 1 to 21, **characterised in that** the retaining clip (58) is made of a spring-elastic material, in particular of metal.

## Revendications

1. Système de soupape, avec un support de soupape (2) qui présente au moins une surface de montage (6) pour une unité de soupape (3), et avec au moins une unité de soupape (3) qui peut être rapportée sur la surface de montage (6) au nombre d'au moins une en formant un sous-ensemble (7) et peut y être fixée au moyen de deux dispositifs de fixation (27, 28) espacés l'un de l'autre, dans lequel le premier dispositif de fixation (27) présente une section crochue (32) placée sur le support de soupape (2) et une deuxième section crochue (33) stationnaire prévue pour se crocheter à la précédente sur l'unité de soupape (3), et dans lequel le deuxième dispositif de fixation (28) comprend au moins une griffe de maintien (58) serrant l'unité de soupape (3) avec le support de soupape (2), **caractérisé en ce que** la première section crochue (32) est disposée sur le support de soupape (2) stationnaire et indépendamment de la griffe de maintien (58), et **en ce que** la griffe de maintien (58) est réalisée en forme de U avec deux branches de blocage (63, 63) mutuellement opposées, en pouvant s'enficher sur le sous-ensemble (7) constitué auparavant par crochetage mutuel des sections crochues (32, 33) de telle manière que ses branches de blocage (63, 64) saisissent chacune avec précontrainte une section de blocage (54, 55) de l'unité de soupape (3) et du support de soupape (2) et serrent ainsi l'unité de soupape (3) contre la surface de montage (6).

2. Système de soupape selon la revendication 1, **caractérisé en ce que** le premier dispositif de fixation (27) est conformé de telle manière que, pour le crochetage des deux sections crochues (32, 33), une mise en place oblique puis un pivotement mutuel de l'unité de soupape (3) et du support de soupape (2) sont nécessaires.

3. Système de soupape selon la revendication 1 ou 2, **caractérisé en ce que** la prise de crochetage des sections crochues (32, 33) provoque un verrouillage mutuel de l'unité de soupape (3) et du support de soupape (2) à la fois perpendiculairement et parallèlement à la surface de montage (6).

4. Système de soupape selon la revendication 3, **caractérisé en ce qu'**au moins l'une des sections crochues (32) s'enfonce à l'état crocheté dans un évidement de verrouillage (38) de l'autre composant (8) du sous-ensemble, l'évidement de verrouillage (38) étant placé de manière avantageuse sur la face inférieure de l'unité de soupape (3) tournée vers le support de soupape (2).

5. Système de soupape selon l'une des revendications 1 à 4, **caractérisé en ce que** la première section crochue (32) forme saillie par rapport à la surface de montage (6).

6. Système de soupape selon l'une des revendications 1 à 5, **caractérisé en ce que** la première section crochue (32) placée sur le support de soupape (2) est dirigée à l'opposé du deuxième dispositif de fixation (28), la première section crochue (32) étant réalisée courbe de préférence convexe sur la face supérieure tournée vers l'unité de soupape (3), afin de permettre à l'unité de soupape (3) de pivoter au-delà lors de l'opération de crochetage.

7. Système de soupape selon l'une des revendications 1 à 6, **caractérisé par** un dispositif de butée (45) qui, quand le sous-ensemble (7) est assemblé, empêche un déplacement de l'unité de soupape (3) par rapport au support de soupape (2) dans la direction d'enfichage de la griffe de maintien (58), le dispositif de butée (45) présentant sur l'unité de soupape (3) de préférence au moins une saillie de butée (46) formant saillie devant une surface de butée (57) du support de soupape (2) dirigée en sens inverse de la direction d'enfichage (68) de la griffe de maintien (58).

8. Système de soupape selon l'une des revendications 1 à 7, **caractérisé en ce que** les sections de blocage (54, 55) sont conformées de telle manière que la griffe de maintien (58) peut être enfichée, dans une direction d'enfichage (68) parallèle à la surface de montage (6), avec une ouverture de griffe (65) tournée dans la direction d'enfichage (68) sur le sous-ensemble (7), la direction d'enfichage (68) étant de préférence parallèle à une ligne (8) parallèle à la surface de montage (6) et s'étendant entre les deux dispositifs de fixation (27, 28).

9. Système de soupape selon l'une des revendications 1 à 8, **caractérisé en ce que** les deux sections de blocage (54, 55) s'écartent du premier dispositif de fixation (27).

10. Système de soupape selon l'une des revendications 1 à 9, **caractérisé en ce que** des moyens de verrouillage (73) sont présents, par lesquels la griffe de maintien (58) est immobilisée de manière amovible par engagement positif dans l'état enfiché sur le sous-ensemble (7), les moyens de verrouillage (73) étant placés de préférence d'une part sur la griffe de maintien (58) et d'autre part sur l'unité de soupape (3).

11. Système de soupape selon la revendication 10, **caractérisé en ce que** les moyens de verrouillage (73) sont conformés en moyens de crantage qui s'enclenchent automatiquement lors de l'enfichage de la griffe de maintien (58).

12. Système de soupape selon la revendication 11, **caractérisé en ce que** les moyens de verrouillage (73) comprennent au moins un crochet de crantage (74) élastique placé sur le sous-ensemble (7), crochet qui, la griffe de maintien (58) étant enfichée, saisit par l'arrière un gradin de verrouillage (76) placé sur celle-ci et qui, quand on exerce sur la griffe de maintien (58) une force de traction de libération opposée à la direction d'enfichage, peut être amené par coopération avec le gradin de verrouillage (76) dans une position de déverrouillage autorisant le retrait de la griffe de maintien (58), dans lequel étant présents de préférence deux crochets de crantage (74) associés à des côtés longitudinaux de la griffe de maintien (58).

13. Système de soupape selon la revendication 12, **caractérisé en ce que** le crochet de crantage (74) au nombre d'au moins un est placé sur l'unité de soupape (3).

14. Système de soupape selon l'une des revendications 1 à 13, **caractérisé en ce que** sur la griffe de maintien (58) est formée au moins une section de prise d'outil (72) qui autorise la mise en place d'un outil de retrait permettant le retrait de la griffe de maintien (58) depuis le sous-ensemble (7).

15. Système de soupape selon l'une des revendications 1 à 14, **caractérisé en ce que** l'unité de soupape (3) présente au moins une soupape (17) à commande électrique, en particulier une soupape à commande électromagnétique.

16. Système de soupape selon l'une des revendications 1 à 15, **caractérisé en ce que** dans le support de soupape (2) s'étend au moins un canal de support de soupape (14) débouchant sur la surface de montage (6) qui, l'unité de soupape (3) étant montée, communique avec au moins un canal de soupape (15) s'étendant dans l'unité de soupape (3) et débouchant sur la face inférieure opposée de l'unité de soupape (3), dans lequel il est prévu entre l'unité de soupape (3) et le support de soupape (2) de préférence au moins un joint élastique (16) pour rendre hermétique la jonction de canaux entre le canal de support de soupape (14) et au moins un canal de soupape (15), joint qui est serré entre l'unité de soupape (3) et le support de soupape (2) quand la griffe de maintien (58) est enfichée.

17. Système de soupape selon l'une des revendications 1 à 16, **caractérisé en ce que** les composants des deux dispositifs de fixation (27, 28) associés à l'unité de soupape (3) sont placés sur une plaque de base (22) de l'unité de soupape (3) munie d'au moins une soupape (17).

18. Système de soupape selon l'une des revendications 1 à 17, **caractérisé par** des moyens de sécurisation de position (48) en prise mutuelle par engagement positif sur le support de soupape (2) et sur l'unité de soupape (3) pour sécuriser la position de ces composants transversalement à une ligne s'étendant entre les deux dispositifs de fixation (27, 28).

19. Système de soupape selon l'une des revendications 1 à 18, **caractérisé en ce que** sur le support de soupape (2) sont placées plusieurs surfaces de montage (6) disposées en rangée les unes à côté des autres et équipées ou pouvant être équipées chacune d'une unité de soupape (3).

20. Système de soupape selon l'une des revendications 1 à 19, **caractérisé par** au moins un capot (77) pouvant être installé au lieu d'une unité de soupape (3) sur une surface de montage (6), capot qui est équipé de composants des dispositifs de fixation (27, 28) qui correspondent à ceux d'une unité de soupape (3).

21. Système de soupape selon l'une des revendications 1 à 20, **caractérisé en ce que** le support de soupape (2) est formé d'une plaque de distribution équipée ou pouvant être équipée de plusieurs unités de soupape (3), ou bien du boîtier d'un appareil fluidique, par exemple le boîtier d'une soupape ou d'un entraînement fluidique.

22. Système de soupape selon l'une des revendications 1 à 21, **caractérisé en ce que** la griffe de maintien (58) est constituée d'un matériau élastique, en particulier de métal.
